# FASCICULE DE BREVET EUROPEEN

(11) **EP 0 780 607 B1**
(45) Date de publication et mention de la délivrance du brevet: **12.03.2003**
(21) Numéro de dépôt: 96119863.7
(22) Date de dépôt: 11.12.1996
(51) Int. Cl.: F16K 1/22, F16K 31/52, F16K 31/04

(54) **Dispositif de commande d'un volet pivotant pour une installation de chauffage et/ou climatisation d'un véhicule automobile**
Betätigungsvorrichtung einer Klappe für eine Heizungs- und/oder Klimaanlage eines Kraftfahrzeugs
Butterfly valve actuator for a motor vehicle heating and/or air-conditioning installation

(30) Priorité: 19.12.1995 FR 9515076
(43) Date de publication de la demande: 25.06.1997
(73) Titulaire: VALEO CLIMATISATION, 78321 La Verrière (FR)
(72) Inventeur: Auvity, Michel, 78140 Velizy (FR)

(56) Documents cités:
- DE-A- 1 908 580
- DE-C- 815 938
- US-A- 2 942 620
- US-A- 4 913 398

## Description

L'invention concerné un dispositif de commande d'un volet pivotant pour une installation de chauffage et/ou climatisation de l'habitacle d'un véhicule automobile.

On connaît déjà des dispositifs de commande de ce type qui comprennent un levier moteur relié, par l'intermédiaire d'une bielle, à un levier récepteur solidaire du volet, le levier moteur étant propre à pivoter de l'une à l'autre de deux positions comprenant une position d'ouverture et une position de fermeture dans lesquelles le volet est respectivement ouvert et fermé.

Le levier moteur, qui est actionné par une commande manuelle ou une commande motorisée, permet ainsi de commander le pivotement du volet pour l'amener en des positions choisies, afin de contrôler le débit d'un flux d'air dans un conduit faisant partie de l'installation.

Cependant, du fait que les composants du dispositif, notamment le levier moteur, le levier récepteur et la bielle, sont fabriqués en grande série avec des tolérances de fabrication assez larges, il peut arriver que, dans la position de fermeture du levier moteur, le volet ne soit pas complètement fermé, c'est-à-dire ne soit pas complètement en appui sur son siège.

Il en résulte alors une fuite d'air qui peut être préjudiciable au bon fonctionnement de l'installation.

L'invention a notamment pour but de surmonter cet inconvénient.

Par ailleurs, le document DE 19 08 580 un dispositif de commande de valve, notamment pour machine à laver le linge comportant une came mis en rotation par un moteur, une bielle reliant la came à un levier, le levier étant solidaire d'une valve qui obture une ouverture.

Lorsque une fibre est coincée dans l'ouverture, la valve reste ouverte et la came n'atteint pas une position permettant un nouvel enclenchement du moteur. Pour résoudre ce problème, le document D1 propose que la taille de la bielle diminue jusqu'à ce que la came est atteint une position permettant l'enclenchement du moteur.

L'invention propose un dispositif de commande d'un volet pivotant du type défini en introduction, dans lequel le levier moteur est propre à passer par une position intermédiaire, proche de la position de fermeture, en laquelle le volet est fermé, en sorte que le déplacement du levier moteur de la position intermédiaire à la position de fermeture, ou inversement, constitue une course morte dans laquelle le volet est fermé et la bielle est sous contrainte et déformée en flexion.

Ainsi, lorsque le levier moteur est déplacé à partir de la position d'ouverture et parvient à la position intermédiaire, le volet est déjà fermé, ce qui interdit le passage du flux d'air. Lors du déplacement ultérieur du levier moteur de la position intermédiaire à la position de fermeture, qui correspond à la course morte, le volet reste fermé, c'est-à-dire maintenu en appui étanche sur son siège, tandis que la bielle se trouve sous contrainte.

De même, lorsqu'on déplace ensuite le levier moteur de la position de fermeture à la position d'ouverture, le volet reste fermé jusqu'à la position intermédiaire, puis s'ouvre ensuite.

Cette position intermédiaire, qui est située proche de la position de fermeture, diffère d'un dispositif à l'autre en fonction des dimensions particulières des composants du dispositif considéré, c'est-à-dire essentiellement en fonction de la valeur de l'entraxe entre le levier moteur et le levier récepteur, ainsi que des dimensions respectives du levier moteur, du levier récepteur et de la bielle.

Selon une autre caractéristique de l'invention, le déplacement du levier moteur entre la position d'ouverture et la position de fermeture, ou inversement, correspond à un débattement angulaire inférieur à 90°.

De préférence, le déplacement du levier moteur entre la position intermédiaire et la position de fermeture, ou inversement, correspond à un débattement angulaire inférieur à 10°.

Dans une forme de réalisation préférée de l'invention, le levier moteur est propre à prendre deux positions d'ouverture situées symétriquement de part et d'autre de la position de fermeture, cette dernière constituant une position instable.

En pareil cas, le levier moteur est propre à passer par deux positions intermédiaires situées symétriquement de part et d'autre de la position de fermeture, en sorte que le déplacement du levier moteur entre les deux positions intermédiaires constitue une course morte dans laquelle le volet est fermé et la bielle est sous contrainte et déformée en flexion

L'invention s'applique en particulier à un dispositif dans lequel la bielle est reliée par deux articulations respectivement au levier moteur et au levier récepteur.

L'invention prévoit alors que la bielle est déformable en flexion, de sorte que la distance entre les deux articulations peut varier lors du déplacement du levier moteur qui correspond à la course morte.

Dans la description qui suit, faite à titre d'exemple, on se réfère au dessin annexé, sur lequel :
- la figure 1 est une vue latérale schématique d'un dispositif selon l'invention, dans lequel le levier moteur est en position d'ouverture;
- la figure 2 est une vue analogue à celle de la figure 1, dans laquelle le levier moteur est en position intermédiaire; et
- la figure 3 est une vue analogue à celle de la figure 1, dans laquelle le levier moteur est en position de fermeture.

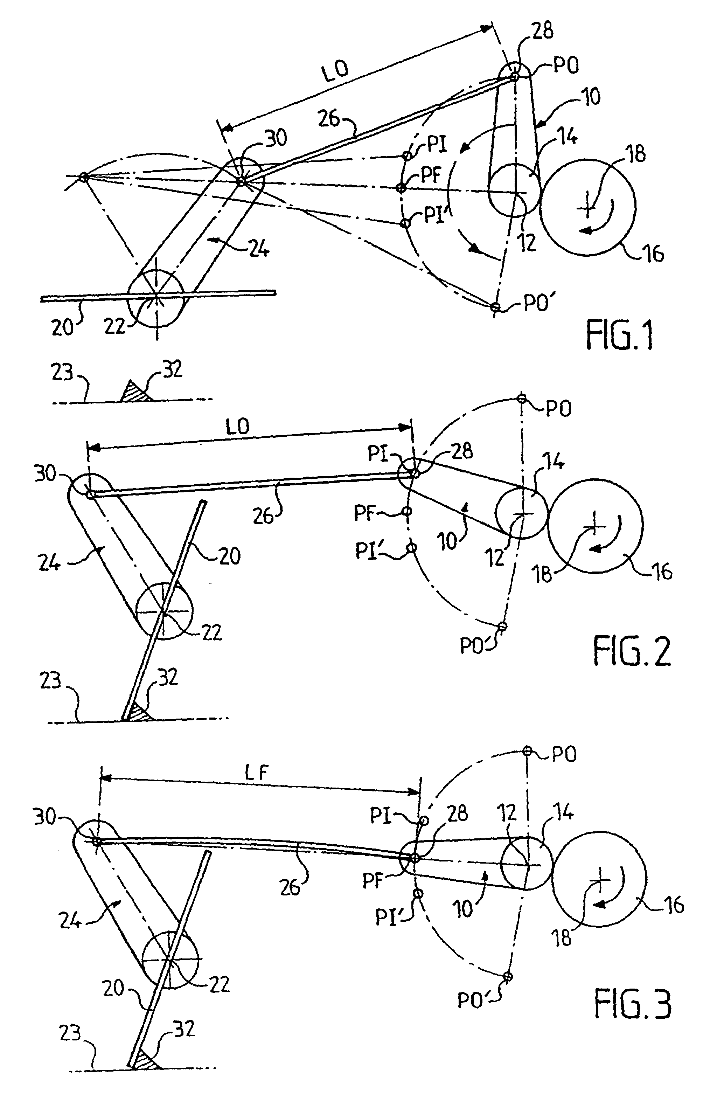

Le dispositif de la figure 1 comprend un levier moteur 10 monté pivotant autour d'un axe de rotation 12 et solidaire d'un pignon denté 14 propre à être actionné par un autre pignon denté 16 monté à rotation autour d'un axe 18 parallèle à l'axe 12. Le pignon 16 peut être entraîné en rotation par une commande manuelle ou motorisée pour faire pivoter le levier 10.

Le levier 10 est propre à pivoter d'une première position d'ouverture PO vers une position d'ouverture PF puis vers une deuxième position d'ouverture PO', et inversement (figure 1). Le levier moteur 10 est représenté dans les positions PO, PI et PF respectivement sur les figures 1, 2 et 3. Les deux positions d'ouverture PO et PO' sont symétriques de part et d'autre de la position de fermeture PF, laquelle constitue une position instable. Le débattement angulaire de la position d'ouverture PO ou PO' à la position de fermeture PF est inférieur à 90°, dans l'exemple d'environ 80°, le débattement angulaire maximal étant ainsi inférieur à 180°.

Le levier moteur 10 commande le pivotement d'un volet 20 monté pivotant autour d'un axe 22 parallèle aux axes 12 et 18. Le volet 20 est propre à contrôler le passage d'un flux d'air à l'intérieur d'un conduit 23 formé dans un boîtier d'une installation de chauffage et/ou climatisation de véhicule automobile.

Sur l'axe 22 est calé un levier récepteur 24, lequel est relié au levier moteur 10 par l'intermédiaire d'une bielle 26. Cette dernière est reliée au levier moteur 10 par une articulation 28 et au levier récepteur 24 par une articulation 30.

La bielle 26 est déformable par flexion, en sorte que sa longueur, telle que définie entre les deux articulations 28 et 30, peut varier. Elle possède au repos une longueur LO (figure 1) qui correspond à la valeur maximale.

Lorsque le levier moteur 10 est en position de fermeture PF, le volet 20 est en position de fermeture, c'est-à-dire qu'il vient en appui étanche contre une butée d'appui 32 (figure 3) formant siège du volet, c'est-à-dire que le volet interdit alors tout passage du flux d'air dans le conduit 23.

Comme les composantes du dispositif sont fabriquées en grande série, et avec des tolérances de fabrication assez larges, la valeur de l'entraxe entre les axes 12 et 22, de même que les longueurs respectives des bras des leviers 10 et 24, et la longueur de la biellette 26, peuvent varier. Si la biellette 26 était non déformable, il se pourrait que, pour certains dispositifs, lorsque le levier moteur 10 est dans la position de fermeture PF, le volet 20 ne soit pas complètement en appui étanche sur la butée 32.

Le dispositif de l'invention permet de surmonter cet inconvénient.

En effet, les dimensions des composants du dispositif sont prévus pour que, lorsque le levier moteur 10 parvient à une position intermédiaire PI (figures 1 et 2) proche de la position de fermeture PF, le volet 20 se trouve déjà en position de fermeture. Dans l'exemple de réalisation, il existe deux positions intermédiaires PI et PI' symétriques de part et d'autre de la position de fermeture PF. Le débattement angulaire du levier 10 entre les positions PI et PF ainsi que celui entre les positions PI' et PF est inférieur à 10°.

Lorsque le levier moteur 10 est déplacé de la position PO à PI, la bielle 26 conserve sa longueur initiale LO. Lorsque le levier moteur 10 parvient à la position intermédiaire PI, le volet 20 vient en appui contre la butée 32. Le levier moteur 10 est ensuite déplacé de la position PI à la position PF, pendant que le volet 20 reste toujours en appui contre son siège. Il en résulte que la bielle 26 subit une contrainte et commence à fléchir, si bien que dans la position de fermeture (figure 3), la longueur LF de la bielle 26, telle que comprise entre les articulations 28 et 30, est inférieure à sa longueur au repos LO. Sur la figure 3, le fléchissement de la bielle a été volontairement exagéré.

Ainsi, le déplacement du levier moteur 10 de la position PI à PF ou inversement de la position PF à PI, constitue une course morte dans laquelle le volet est fermé et la bielle est sous contrainte.

Il en est de même du déplacement angulaire du volet, de la position PF à la position PI' ou inversement.

Ainsi, lorsque le levier moteur 10 passe de la position PO à la position PO', il passe par un déplacement des positions PI à PI' correspondant à deux courses mortes.

Bien entendu, l'invention n'est pas limitée à la forme de réalisation décrite précédemment à titre d'exemple et s'étend à d'autres variantes, définies par les revendications

Ainsi, il est possible de prévoir une seule position d'ouverture et donc une seule position intermédiaire, la course angulaire du levier moteur se faisant entre la position PO et la position PF.

Le dispositif de l'invention permet ainsi de contrôler le passage d'un flux d'air dans un boîtier faisant partie d'une installation de chauffage et/ou de climatisation.

Il permet de compenser les variations dimensionnelles inhérent à la fabrication en grande série des composants du dispositif de commande, de telle sorte que l'on garantit à coup sûr que le volet est fermé lorsque le levier moteur est dans la position de fermeture.

## Revendications

1. Dispositif de commande d'un volet pivotant d'une installation de chauffage et/ou climatisation d'un véhicule automobile, comprenant un levier moteur (10) relié, par l'intermédiaire d'une bielle (26), à un levier récepteur (24) solidaire du volet (20), le levier moteur (10) étant propre à pivoter de l'une à l'autre de deux positions comprenant une position d'ouverture (PO; PO') et une position de fermeture (PF) dans lesquelles le volet (20) est respectivement ouvert et fermé,
**caractérisé en ce que** le levier moteur (10) est propre à passer par une position intermédiaire (PI; PI'), proche de la position de fermeture (PF), en laquelle le volet (20) est fermé, en sorte que le déplacement du levier moteur (10) de la position intermédiaire (PI; PI') à la position de fermeture (PF), ou inversement, constitue une course morte (CM) dans laquelle le volet (20) est fermé et la bielle (26) est sous contrainte et déformée en flexion.

2. Dispositif selon la revendication 1, **caractérisé en ce que** le déplacement du levier moteur (10) entre la position d'ouverture (PO; PO') et la position de fermeture (PF), ou inversement, correspond à un débattement angulaire inférieur à 90°.

3. Dispositif selon l'une des revendications 1 et 2, **caractérisé en ce que** le déplacement du levier moteur (10) entre la position intermédiaire (PI; PI') et la position de fermeture (PF), ou inversement, correspond à un débattement angulaire inférieur à 10°.

4. Dispositif selon l'une des revendications 1 à 3, **caractérisé en ce que** le levier moteur (10) est propre à prendre deux positions distinctes d'ouverture (PO; PO') situées symétriquement de part et d'autre de la position de fermeture (PF), cette dernière constituant une position instable.

5. Dispositif selon la revendication 4, **caractérisé en ce que** le levier moteur (10) est propre à passer par deux positions intermédiaires (PI; PI') situées symétriquement de part et d'autre de la position de fermeture (PF), en sorte que le déplacement du levier moteur entre les deux positions intermédiaires (PI; PI') constitue la course morte (CM).

6. Dispositif selon l'une des revendications 1 à 5, dans lequel la bielle (26) est reliée par deux articulations (28, 30) au levier moteur (10) et au levier récepteur (20), et est déformable en flexion, de sorte que la distance entre les deux articulations (28, 30) peut varier lors du déplacement du levier moteur (10) qui correspond à la course morte (CM).

## Claims

1. Device for controlling a pivoting flap in a heating and/or air conditioning installation for a motor vehicle, comprising a driving lever (10) connected, by means of a link (26), to a receiving lever (24) fixed to the flap (20), the driving lever (10) being able to pivot from one to another of two positions comprising an open position (PO; PO') and a closed position (PF) in which the flap (20) is respectively open and closed, **characterised in that** the driving lever (10) is able to pass through an intermediate position (PI; PI'), close to the closed position (PF), in which the flap (20) is closed, so that the movement of the driving lever (10) from the intermediate position (PI; PI') to the closed position (PF) or vice-versa constitutes a dead travel (CM) in which the flap (20) is closed and the link (26) is under stress and deformed under bending.

2. Device according to Claim 1, **characterised in that** the movement of the driving lever (10) between the open position (PO; PO') and the closed position (PF) or vice-versa corresponds to an angular movement of less than 90°.

3. Device according to one of Claims 1 and 2, **characterised in that** the movement of the driving lever (10) between the intermediate position (PI; PI') and the closed position (PF) or vice-versa corresponds to an angular movement of less than 10°.

4. Device according to one of Claims 1 to 3, **characterised in that** the driving lever (10) is able to adopt two distinct open positions (PO; PO') situated symmetrically on each side of the closed position (PF), the latter constituting an unstable position.

5. Device according to Claim 4, **characterised in that** the driving lever (10) is able to pass through two intermediate positions (PI; PI') situated symmetrically on each side of the closed position (PF), so that the movement of the driving lever between the two intermediate positions (PI; PI') constitutes the dead travel (CM).

6. Device according to one of Claims 1 to 5, in which the link (26) is connected by two articulations (28, 30) to the driving lever (10) and to the receiving lever (20), and is deformable under bending so that the distance between the two articulations (28, 30) can vary during the movement of the driving lever (10) which corresponds to the dead travel (CM).

## Patentansprüche

1. Steuereinrichtung einer schwenkbaren Klappe einer Heiz- und/oder Klimaanlage eines Kraftfahrzeuges, umfassend einen Antriebshebel (10), unter Zwischenschaltung eines Pleuels (26) mit einem Empfängerhebel (24) verbunden, der mit der Klappe (20) verbunden ist, wobei der Antriebshebel (10) geeignet ist zur Verschwenkung von der einen zu der anderen von zwei Positionen, umfassend eine Öffnungsposition (PO; PO') und eine Verschluss- oder geschlossene Position (PF), in welchen die Klappe (20) jeweils offen bzw. geöffnet und geschlossen bzw. verschlossen bzw. zu ist, **dadurch gekennzeichnet, dass** der Antriebshebel (10) geeignet ist, eine zwischengelagerte Position (PI; PI') zu durchqueren, nahe zu der Verschlussposition (PF), in welcher die Klappe (20) geschlossen ist, so dass die Bewegung oder Versetzung des Antriebshebels (10) von der zwischengelagerten Position (PI; PI') zu der Verschlussposition (PF) oder umgekehrt einen Totgang bzw. Leerlauf (CM) darstellt, bei welchem die Klappe (20) geschlossen ist und das Pleuel (26) unter Spannung gebeugt oder flektionsmäßig verformt ist.

2. Einrichtung nach Anspruch 1, **dadurch gekennzeichnet, dass** die Versetzung des Antriebshebels (10) zwischen der Öffnungsposition (PO; PO') und der Verschlussposition (PF) oder umgekehrt einem winkelmäßigen Ausschlag von weniger als 9O° entspricht.

3. Einrichtung nach einem der Ansprüche 1 und 2, **dadurch gekennzeichnet, dass** die Bewegung oder Versetzung des Antriebshebels (10) zwischen der zwischengelagerten oder Zwischenposition (PI; PI') und der Verschlussposition (PF) oder umgekehrt einem winkelmäßigen Ausschlag von weniger als 10° entspricht.

4. Einrichtung nach einem der Ansprüche 1 bis 3, **dadurch gekennzeichnet, dass** der Antriebshebel (10) geeignet ist, zwei distinkte Öffnungspositionen (PO; PO') einzunehmen, symmetrisch befindlich beidseitig der Verschlussposition (PF), wobei letztere eine instabile Position darstellt.

5. Einrichtung nach Anspruch 4, **dadurch gekennzeichnet, dass** der Antriebshebel (10) geeignet ist, durch zwei Zwischen- oder zwischengelagerte Positionen (PI; PI') zu treten, symmetrisch befindlich beidseitig der Verschlussposition (PF), so dass die Versetzung oder Bewegung des Antriebshebels zwischen den zwei zwischengelagerten Positionen oder Zwischenpositionen (PI; PI') einen Freilauf bzw. einen wirkungslosen Abschnitt darstellt.

6. Einrichtung nach einem der Ansprüche 1 bis 5, bei welcher das Pleuel (26) mittels zweier Anlenkungen oder Gelenke (28, 30) mit dem Antriebshebel (10) und dem Empfängerhebel (20) verbunden ist und biegbar bzw. beugbar oder flexionsmäßig verformbar ist, so daß der Abstand zwischen den zwei Anlenkungen oder Gelenken (28, 30) variieren kann während der Bewegung oder Versetzung des Antriebshebels (10), entsprechend dem Freilauf bzw. dem wirkungslosen Bereich bzw. Totgang (CM).
